# EUROPEAN PATENT APPLICATION

(11) **EP 4 191 488 A1**
(43) Date of publication of application: **07.06.2023**
(21) Application number: 21763396.5
(22) Date of filing: 28.07.2021
(51) Int. Cl.: G06Q 10/06, G06Q 30/00

(54) **TECHNICAL AUDIT PROCEDURE**

(30) Priority: 30.07.2020 ES 202030811
(71) Applicant: Eurocontrol, S.A., 28010 Madrid (ES)
(72) Inventor: FERNANDEZ MUÑOZ, Juan María, 28010 Madrid (ES)
(74) Representative: De Castro Hermida, José Luis
(86) International application number: PCT/ES2021/070574
(87) International publication number: WO 2022/023614

(57) **Abstract**

Technical audit procedure comprising:
- at least a portable electronic device (1) with a camera and a data input peripheral, remotely connected to
- at least a controller (2);
- a first step of initiating the intervention,
- the continuous geolocation of the device (1) and its forwarding to the controller (2);
- a forwarding connection of text, video, or photo files with the geolocation of the place where the file was created; and
- a video call connection between the device (1) and a centralized expert.

## Description

### TECHNICAL SECTOR

The present invention relates to a technical audit procedure, which allows companies of this type of service to carry out a review of equipment (machines, vehicles...) and facilities with a high depth and allowing a better review.

### STATE OF THE ART

In the inspection and technical audits of companies, facilities, constructions and any type of structure or dispersed element, it is necessary to carry out a series of inspections and controls, associating the corresponding documentation both mandatory one for the work as prior documentation, and the one associated to the registration and documentation of the works. These inspections comprise going in person to the place where the element to be inspected is located and carrying out a series of steps or tasks.

However, the different problems that can be detected can be very diverse in nature. Therefore, any inspector or auditor must have very deep knowledge and extensive experience. Any anomalous result that he/she cannot analyse himself/herself, or any aspect subject to approval, is subject to a second visit. If the audit or inspection is prior to the start-up of the installation, this delays its operation in addition to incurring higher costs.

On the other hand, any inspection generates a documentary trace that must be able to be controlled to ensure that the inspection or audit meets all the standards of the art.

The applicant does not know of any method or device similar to the invention, which can be considered as a solution to the same technical problems.

### BRIEF EXPLANATION OF THE INVENTION

The invention consists of a technical audit procedure according to the claims.

The technical audit procedure requires at least a portable electronic device and at least a controller to which the device is remotely connected. The device has a camera and a data input peripheral and is enabled to make a forwarding connection of text, video, or photo files with the geolocation of the input point. This forwarding can be instantaneous or deferred. It also comprises a video call connection between the device and a centralized expert through a controller.

To ensure that inspections or audits are carried out properly, an incident forecasting step is established using artificial intelligence. Through the history of incidents in the area, in the type of facility and any other data, it is foreseen which facilities or structures have the highest risk of defects and priority is given to them.

Further particular embodiments will be discussed later.

### DESCRIPTION OF THE DRAWINGS

For a better understanding of the invention, the following figures are included that show examples of particular embodiments.
Figure 1 represents a diagram of the operation of a first example of embodiment.
Figure 2 represents a diagram of the functionalities of the system in a preferred example.
Figure 3 represents the content of each inspection ticket in this preferred example.
Figure 4: represents the functionalities available to the user or inspector in the preferred example.

### EMBODIMENTS OF THE INVENTION

An embodiment of the invention will be briefly described below, as an illustrative and non-limiting example thereof.

The invention comprises an audit procedure that starts from one or more portable electronic devices (1) remotely connected to one or more controllers (2). The devices (1) are configured to connect by some already known technology such as 4G, 5G, or even by Wi-Fi or another system available on site.

For example, the devices (1) can be mobile phones (smartphones), tablets... carried by a user or inspector. They must have a camera and a data input peripheral such as a touch screen, keyboard, or other similar system. It must also have a geolocator (3), generally a GPS system, Galileo, a radio beacon system... The device (1) is permanently geolocated, at least from the beginning of the intervention (audit, inspection...), and forwarding its location to the controller (2). In addition, the geolocation system allows to automatically start the inspection upon arrival at the installation site or the first milestone or inspection point, as well as being able to know in real time the points of the geography where work is being carried out. This allows defining a trajectory or series of milestones or points that must be inspected and verifying that the intervention has been carried out at that point. For example, it may be mandatory to create at least one data file (photo, video, text, or any other type) at each milestone. This allows the monitoring of the user's journey, knowing which milestones remain to be inspected, etc.

The communication of the device (1) with the controller (2) comprises a first dedicated connection for the forwarding of files (text, data, video, photo) associated with the intervention, and they will be kept encapsulated with it in a database (4). Files can be sent from device (1) to controller (2) or vice versa. The files include the geolocation where they have been generated, when they come from the device. Thus, it is possible to control at which point each photo or video has been taken. Likewise, it is the position in which the measures or elements that make up the text or data file have been noted down. If it is the controller (2) that forwards the files, but they were generated in a previous intervention, they will also carry the geolocation. Documents generated by other personnel may not require geolocation.

That is, thanks to continuous geolocation, it can be ensured that the user goes through the points or milestones to be controlled and the documentation generated with those milestones is associated, among other possible points. The detection of a fault or relevant characteristic outside the milestones will also be reflected. This makes it possible to easily compare the current status with a previous visit, as well as to notify the progress of the work in real time, being able to identify incidents on the planned plan or blockages that are communicated automatically.

The device (1) can carry out the forwarding of files live or pre-load them to forward them when it reaches a good network coverage, a Wi-Fi zone, or another point. The database (4) will preferably be in the cloud, with the necessary security measures (encryption...).

It also comprises a connection for video calling (streaming) with a centralized support auditor or expert (3). This connection can be initiated by the field user or by the expert (3) or centralized auditor issuing a push notification according to the status of the work. Possible reasons for the connection from the user may be the need for support, tutelage or simply the acceptance of their work. For his part, the expert (3) or auditor has a system for predicting the results of his inspection in that the results obtained in previous interventions by this inspector are consolidated, for that time of installation, company, work area... so that it is known to what extent the results obtained are correlated with the previous results. In this way the auditor/inspector can now focus his attention on the most common errors in order to review them better.

On the other hand, the prediction of events or deviations that establishes a level of criticality of the installation based on different parameters allows him to focus its attention on those facilities that require a higher level of control.

Some examples of main parameters that can serve as a basis to identify the level of criticality of the intervention, in order to focus more attention on them could be:
- Percentage of audits where installation deficiencies are found.
- Average number of deficiencies per audit.
- Number of critical deficiencies (deficiencies that may cause an imminent outage in service or are a potential risk to people). These deficiencies must be corrected immediately and are considered within the control points to be verified in any case.
- Average critical deficiencies per audit
- Typology of the deficiencies detected (Installation, labelling, etc.)
- Climatology in the intervention area.
- Presence of other agents at the time of installation.
- Business activity load.
- Time window associated with the intervention.

With these parameters, an assessment of the performance of the installation companies or of the technicians themselves can be made, since each action is associated with them. Thus, in future audits it can allow to mark a more exhaustive control point on those companies/technicians with the worst results. To do this, the probability of future problems, especially critical ones, is estimated.

In addition to the type of installations in which more deficiencies are committed, as estimated with these parameters, a prioritization of audits can also be established based on the scope of the work to be carried out, placing greater focus on those installations that are more complex.

All devices (1) in use will connect with a limited series of user support experts (3). In this way, if any part of the technical audit is complex and requires the support of an expert (3) in that field, the connection can be made via streaming to obtain his/her opinion. This reduces the need for travel and the audit time. Users in the field will connect through applications installed on their devices (1) associating the login to an intervention or a unique action ticket. It is also possible that the installation or maintenance work may be accepted based on the particular conditions and/or execution procedures, which makes it possible to avoid new visits and speed up the installation validation process.

Streaming connections can be recorded (total or only voice) to associate them with the file. "Screenshots" or photos of the video call can also be obtained.

The procedure starts from a list of tasks (checklist) with the control points that the user must review, for which he/she marks the corresponding boxes with the result of the audit: values, compliance yes/no... the result of these checks is stored in a database (4) on the controller (2) or in the cloud. Previously, or during the intervention, checks are carried out on the result of the inspection in relation to the history of previously obtained results, as well as the contribution of a predictive behaviour through artificial intelligence on the result that allows to check to what extent the results of the intervention are in line with the values generally obtained. It can be carried out, for example, by means of a classification algorithm (Random Forest), of the prediction for the elements

This allows the expert (3) to focus on aspects that usually present objections or deficiencies both in general and in a particular way and in relation to the type of installation, area of action, operator, or person in charge of the work. It also allows evaluating the action of the user or inspector by identifying the inspection points in which he/she is showing greater permissiveness or rigor than expected based on what was identified for that inspection or what is expected based on the determinants that concur (predictive model using artificial intelligence).

Consequently, it is possible to issue reports of the times associated with the intervention and check if they correspond to time windows of inspection execution. These windows are configurable if a large number of relevant incidents are detected, or if artificial intelligence estimates that the foreseeable number of incidents is low. If the user exceeds the window, delay or blocking notifications can be issued.

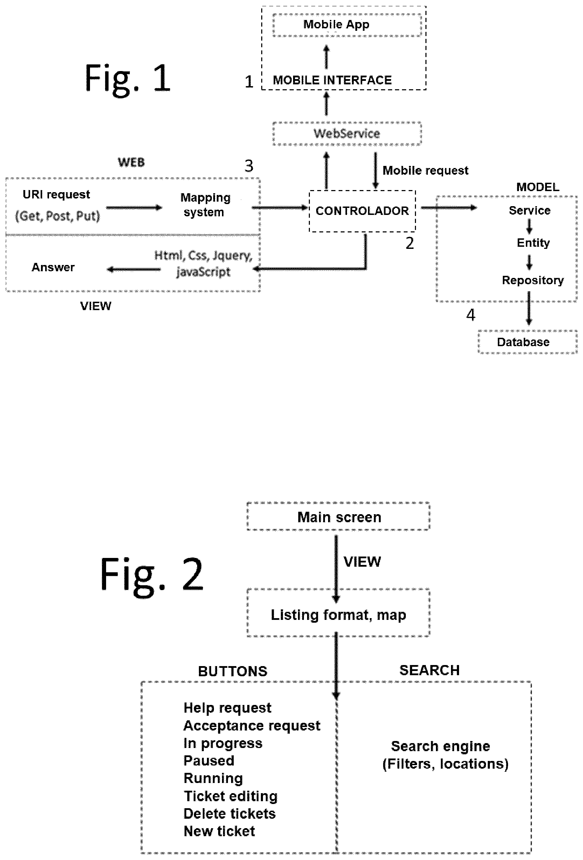

Figures 2 to 4 show one way to implement this procedure or system.

A web application allows you to create inspections and milestones, review who executes what inspection, group by location, geographic area, supplier, customer, operator... or any variable that has been required to be entered. Artificial intelligence will allow conclusions to be drawn for future inspections.

In figure 2 a table with the functionalities of the aforementioned web application is shown. It allows you to see the inspections carried out in the form of a map and/or list, and manage them: launch them, assign them, check their status, request assistance from an expert (3), etc. It is also possible to search, filter by characteristics...

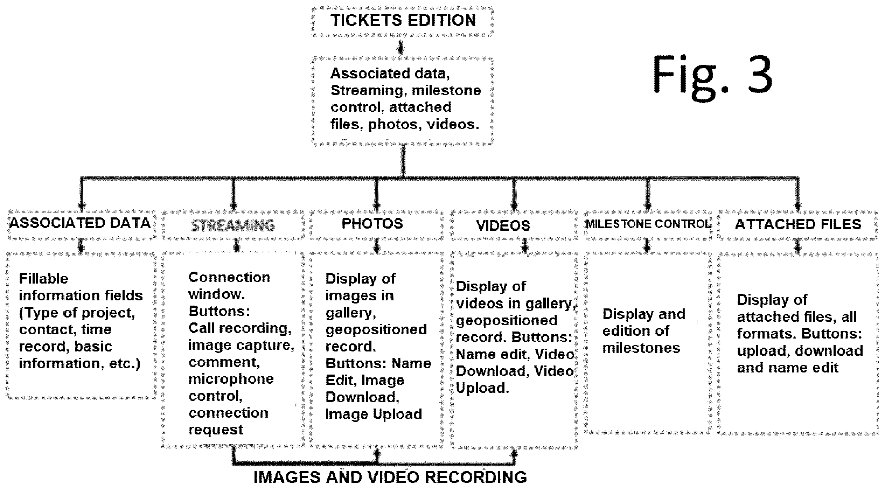

Each inspection comprises a ticket that is completed as shown in figure 3. The ticket defines the associated data: place, date, person in charge... and any relevant information. Depending on the case, it can contain photos or videos, a recording of the streaming, and you can view files or control the defined milestones and edit them. All information is stored as a reliable and non-alterable record of the intervention.

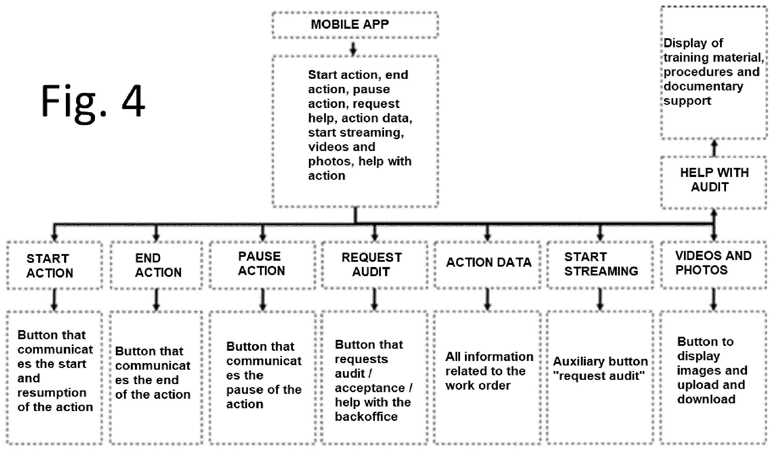

During the inspection, the user with the device (1) has a whole series of options that are shown in figure 4.

The inspection begins, on the device, when the user notifies of his arrival at the installation to be inspected. At any time, you can end it, pause it, ask the expert for help (3), consult, or edit the data, upload files and consult previous ones, either from previous visits to the installation or from support or tutorials.

## Claims

1. Technical audit procedure comprising:
- at least a portable electronic device (1) with a camera and a data input peripheral, remotely connected to
- at least a controller (2);
**characterized by** comprising
- a first step of initiating the intervention,
- the continuous geolocation of the device (1) and its forwarding to the controller (2);
- a forwarding connection of text, video, or photo files with the geolocation of the place where the file was created; and
- a video call connection between the device (1) and a centralized expert.

2. Procedure, according to claim 1, **characterized in that** the forwarding is deferred.

3. Procedure, according to claim 1, **characterized in that** it comprises a step of forecasting incidents by means of artificial intelligence.

4. Procedure, according to claim 1, **characterized in that** it comprises a step of defining a series of milestones for the device (2) and carrying out the inspection.

5. Procedure, according to claim 4, **characterized in that** it comprises a request for creation of at least one file at each milestone.

6. Procedure, according to claim 1, **characterized in that** it comprises a step of creating a time window for the intervention.

7. Procedure, according to claims 3 and 6, **characterized in that** the time window is adjustable according to the artificial intelligence estimate.
